# EUROPEAN PATENT SPECIFICATION

(11) **EP 4 137 092 B1**
(45) Date of publication and mention of the grant of the patent: **17.09.2025**
(21) Application number: 22190116.8
(22) Date of filing: 12.08.2022
(51) Int. Cl.: A61C 19/04, A61C 3/00

(54) **DENTAL TOOL**
ZAHNÄRZTLICHES WERKZEUG
OUTIL DENTAIRE

(30) Priority: 18.08.2021 TW 110130529
(43) Date of publication of application: 22.02.2023
(73) Proprietor: Shih, Jui-Yuan, Lukang Township, Changhua County (TW)
(72) Inventor: Shih, Jui-Yuan, Lukang Township, Changhua County (TW)
(74) Representative: Becker, Eberhard

(56) References cited:
- WO-A1-03/022136
- US-A1- 2003 091 956
- US-A1- 2012 231 411
- US-A1- 2017 296 315

## Description

### 1. Field of the Invention

The present invention relates to a dental tool, and more particularly to a dental tool that may provide a measurement effect, may improve inspection experience, and is convenient in use.

### 2. Description of Related Art

At present, there are quite a few tools used in dental clinics, such as explorers, mirrors, pliers and other instruments, which are frequently used tools in the process of dental inspection or treatment. Among them, explorers mainly provide dentists with tactile examination and determination of whether there is any abnormality in the patient's teeth, such as the depth of the periodontal pocket, the thickness of the gum, the looseness of the teeth, and the gap width of the teeth, etc. A conventional explorer has a rod-shaped handle and one or two needles disposed on an end or two ends of the conventional explorer, and each one of the needles is used as a working end. The dentist may inspect the patient's teeth by holding the handle and using the needles of the conventional explorer to inspect the patient's teeth. However, the conventional explorer only has a single effect of detecting teeth, and cannot provide other uses and effects.

In addition, when a patient needs dental implants, conventional surgical guides corresponding to the patient's tooth positions need to be manufactured as the measurement benchmark for subsequent drilling, dental implant (artificial root implantation), etc., which can only be used by a specific and single patient, and cannot be applied to other patients. Furthermore, the production cost is high, which relatively limits the applicability, practicability and economy of the conventional surgical guides.

Further, the needles of the conventional explorer are made of stainless steel, and have a certain structural strength. The needles cause discomfort to the patient when probing teeth, and when the conventional explorer falls to the ground or collides with other objects, the needles will be bent or deformed, which will affect the subsequent reusability. When the needle of the conventional explorer is inserted into a posterior area of an upper jaw of the patient via a drilling hole of the alveolar bone, if the dentist does not pay attention, the needle may puncture the patient's sinus membrane. When the bone graft is filled in the alveolar bone, the bone graft will enter the sinus cavity via the broken sinus membrane, which may lead to infection and suppuration in the sinus cavity, resulting in infection of the maxillary sinus. In severe cases, the bacteria will spread into the brain, causing damage to the brain and affecting life safety. Therefore, the conventional explorer needs to be improved.

Additionally, another conventional dental tools are also disclosed in US 2003/091956 A1 and WO 03/022136 A1. In US 2003/019956 A1, the dentist's hand tool has a mirror portion and a handle. The handle incorporates a well or socket at its end remote from the mirror portion, which includes a threaded sleeve which engages a threaded rod of the handle. The length or depth of the well or socket is adjusted by rotating the sleeve until the well is set at a desired depth, measured between an end face of the rod and an end of the sleeve. In WO 03/00136 A1, the dental instrument has a handle, a mirror holder attached to a first end of the handle, two mirrors respectively mounted to both side surfaces of the mirror holder, a dental attachment removable attached to a second end of the handle, and a scale is provided at the second end of the handle for measuring a length.

To overcome the shortcomings, the present invention tends to provide a dental tool to mitigate the aforementioned problems.

The main objective of the invention is to provide a dental tool that may provide a measurement effect, may improve inspection experience, and is convenient in use.

The invention is set out in the appended set of claims. The following disclosure serves a better understanding of the present invention.

Other objects, advantages and novel features of the invention will become more apparent from the following detailed description when taken in conjunction with the accompanying drawings.

### IN THE DRAWINGS:

Fig. 1 is a perspective view of a first embodiment of a dental tool in accordance with the present invention;
Fig. 2 is a side view of the dental tool in Fig. 1;
Fig. 3 is an enlarged side view of the dental tool in Fig. 2 at a circle A;
Fig. 4 is an enlarged side view of the dental tool in Fig. 2 at a circle B;
Figs. 5 to 10 are operational perspective views of the dental tool in Fig. 1;
Fig. 11 is a side view of a second embodiment of a dental tool in accordance with the present invention;
Fig. 12 is a side view of a third embodiment of a dental tool in accordance with the present invention;
Fig. 13 is a side view of a fourth embodiment of a dental tool in accordance with the present invention;
Fig. 14 is an enlarged side view of a fifth embodiment of a dental tool in accordance with the present invention;
Fig. 15 is another enlarged side view of the dental tool in Fig. 14;
Fig. 16 is a perspective view of a sixth embodiment of a dental tool in accordance with the present invention;
Fig. 17 is an enlarged and exploded perspective view of the dental tool in Fig. 16;
Fig. 18 is an enlarged side view in partial section of the dental tool in Fig. 16;
Fig. 19 is an enlarged and exploded perspective view of a seventh embodiment of a dental tool in accordance with the present invention;
Fig. 20 is an enlarged side view of an eighth embodiment of a dental tool in accordance with the present invention;
Fig. 21 is an enlarged side view of a ninth embodiment of a dental tool in accordance with the present invention;
Fig. 22 is another enlarged side view of the dental tool in Fig. 21;
Fig. 23 is an enlarged side view of a tenth embodiment of a dental tool in accordance with the present invention;
Fig. 24 is an enlarged and exploded side view of the dental tool in Fig. 23;
Fig. 25 is a perspective view of an eleventh embodiment of a dental tool in accordance with the present invention;
Fig. 26 is an enlarged side view of the dental tool in Fig. 25;
Fig. 27 is a side view of a twelfth embodiment of a dental tool in accordance with the present invention;
Fig. 28 is a side view of a thirteenth embodiment of a dental tool in accordance with the present invention;
Fig. 29 is an enlarged cross sectional side view of a fourteenth embodiment of a dental tool in accordance with the present invention;
Fig. 30 is an enlarged cross sectional side view of a fifteenth embodiment of a dental tool in accordance with the present invention;
Fig. 31 is an enlarged side view in partial section of a sixteenth embodiment of a dental tool in accordance with the present invention;
Fig. 32 is an enlarged cross sectional side view of a seventeenth embodiment of a dental tool in accordance with the present invention;
Fig. 33 is an enlarged side view in partial section of an eighteenth embodiment of a dental tool in accordance with the present invention;
Fig. 34 is an enlarged and exploded perspective view of the dental tool in Fig. 33;
Fig. 35 is a side view of a nineteenth embodiment of a dental tool in accordance with the present invention;
Fig. 36 is an enlarged and exploded side view in partial section of a twentieth embodiment of a dental tool in accordance with the present invention;
Fig. 37 is a side view in partial section of a twenty-first embodiment of a dental tool in accordance with the present invention;
Fig. 38 is an enlarged and exploded side view in partial section of a twenty-second embodiment of a dental tool in accordance with the present invention;
Fig. 39 is a side view in partial section of a twenty-third embodiment of a dental tool in accordance with the present invention; and
Fig. 40 is an enlarged and exploded side view in partial section of a twenty-fourth embodiment of a dental tool in accordance with the present invention.

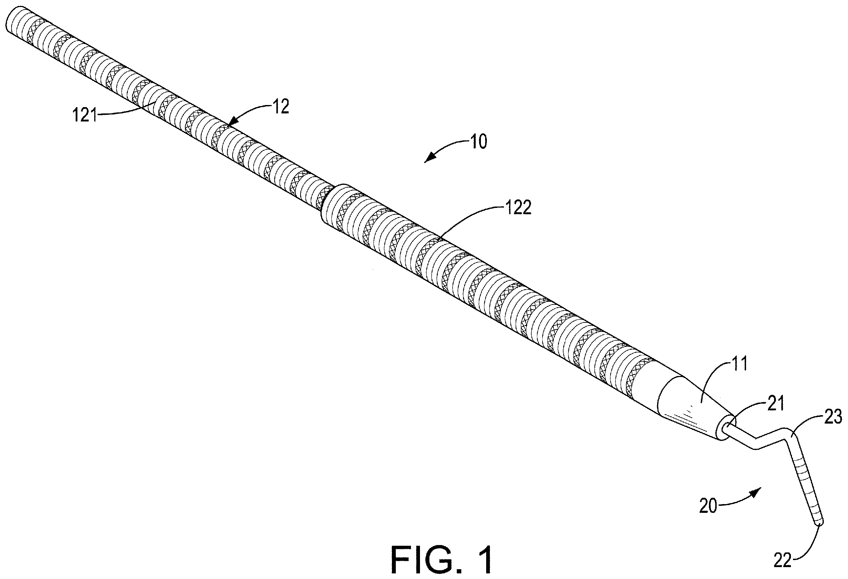

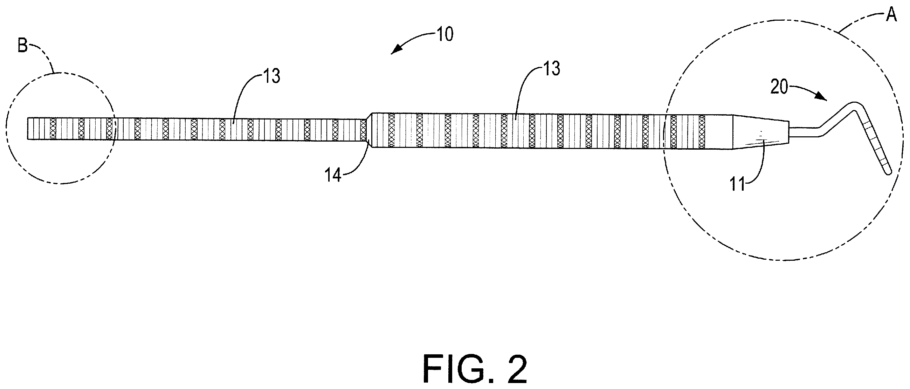

With reference to Figs. 1 to 4, a first embodiment of a dental tool in accordance with the present invention comprises a body 10 and a working element 20.

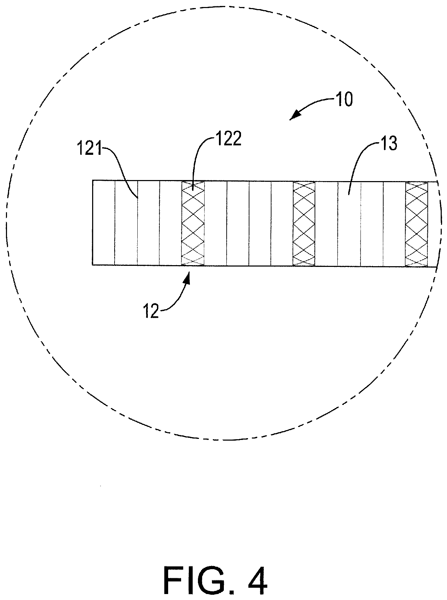

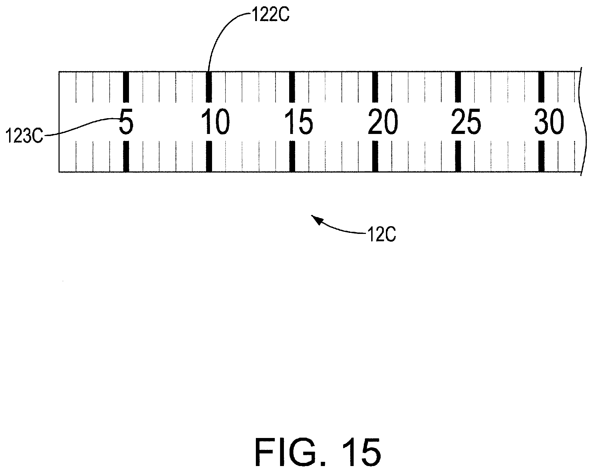

The body 10 is an elongated rod, and a cross-section of the body 10 can be rectangular, circular, triangular, square, hexagonal or polygonal, can be in a flat shape, allowing a user to hold the body 10, and can provide a stable holding effect. The body 10 has a connecting portion 11 and a measuring portion 12. The connecting portion 11 is disposed on an end of the body 10. The measuring portion 12 is formed on an external surface of the body 10 opposite to the connecting portion 11 and can be a size scale formed on the external surface of the body 10 by laser, machining or coating. With reference to Fig. 4, a graduated scale 121 is formed on the external surface of the body 10 every 1 millimeter (mm), and a mark 122 is formed on the external surface of the body 10 every 5 millimeters (mm). The mark 122 can be a mesh notch or an obvious trace notch, and a number mark as shown in Fig. 15 can be set at each of the marks 122, so that a user can quickly obtain the corresponding size value. The graduated scales 121 and the marks 122 of the measuring portion 12 not only allow the body 10 to have the function of measuring size, but also increase the frictional force of the user to hold the body 10 and improve the stable holding effect. Preferably, the body 10 has two rod portions 13, and the two rod portions 13 are connected to each other and have different outer diameters, so that a stepped face 14 is formed at a connecting location between the two rod portions 13, and the measuring portion 12 is formed on outer surfaces of the two rod portions 13.

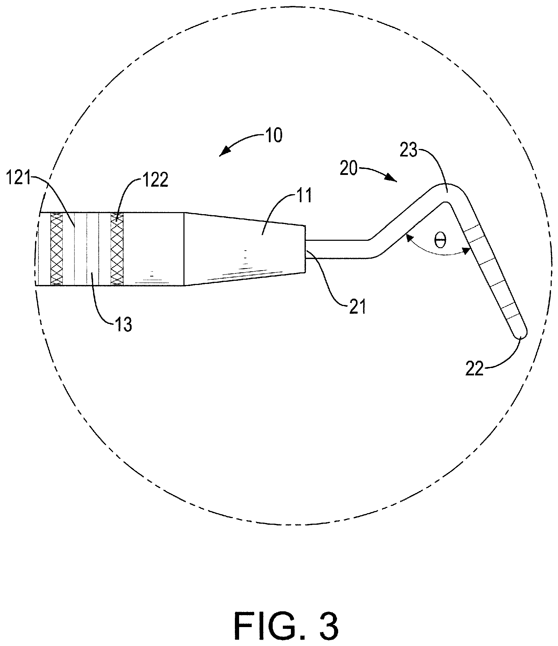

With reference to Figs. 1 to 3, the working element 20 is connected to the body 10 and has a connecting end 21 and a working end 22. The connecting end 21 of the working element 20 is connected to the connecting portion 11 of the body 10. The working end 22 of the working element 20 is connected to the connecting end 21 of the working element 20 and extends out of the connecting portion 11. Furthermore, the working element 20 may be a rod made of Shape Memory Alloys (SMA) to have physical properties of shape memory and pseudo-elasticity. In addition, the working element 20 may be a rod made of stainless steel, titanium alloys, platinum or tungsten. Preferably, with reference to Fig. 3, the working element 20 has a curved portion 23 formed between the connecting end 21 and the working end 22 with an included angle Θ.

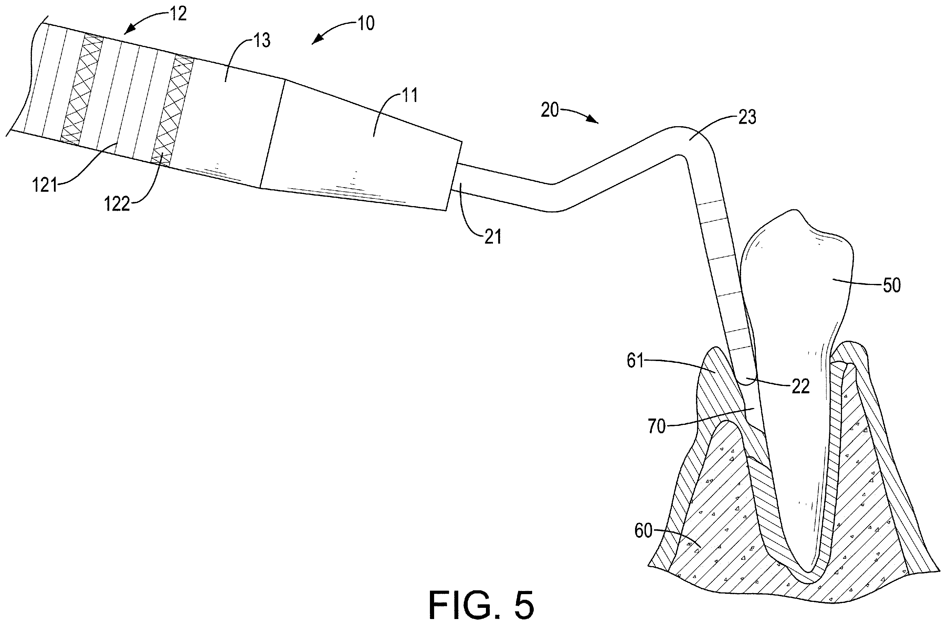

According to the above-mentioned features and structural relationships of the present invention, the first embodiment of the dental tool is an explorer, with reference to Fig. 5, a dentist can hold the body 10 and detect the status of the patient's gums, periodontal pockets, etc., so as to detect and inspect the relevant conditions of the patient's gums or periodontal pockets via the working end 22 of the working element 20. The working end 22 of the working element 20 can be inserted into a gap between the patient's teeth 50 and the gum 61 (located outside the alveolar bone 60) to confirm a depth of the periodontal pocket 70. Since the working element 20 is made of shape memory alloy, in the process of detecting the periodontal pocket 70, the working element 20 can be elastically deformed in response to the force exerted by the dentist, effectively avoiding excessive force that causes the patient's discomfort during consultation. Furthermore, since the working element 20 is made of shape memory alloy, stainless steel, titanium alloy, platinum or tungsten, when the explorer falls to the ground or collides with other objects, the working end 22 of the working element 20 can respond to the external force, after elastic bending or deformation, the working end 22 will be returned to the original state, which will not affect subsequent reuse. In addition, the dental tool of the present invention can also be used to detect bone defects around dental implants and gums after dental implants.

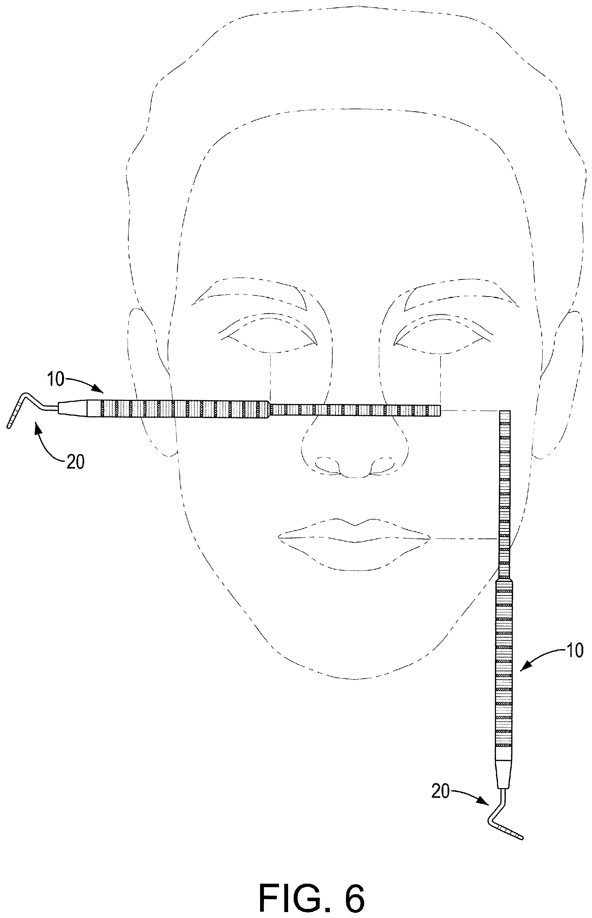

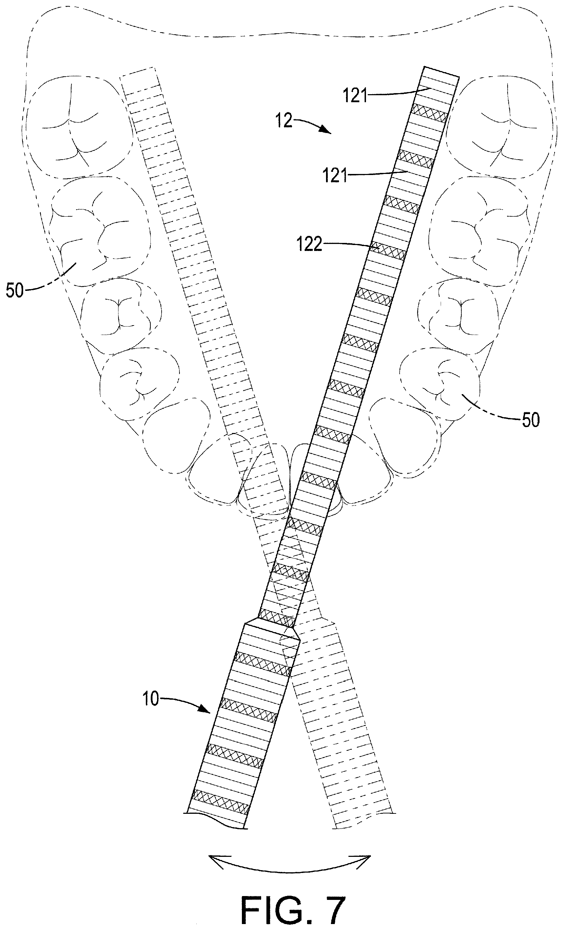

With reference to Fig. 6, the explorer of the first embodiment of the present invention can provide a detection effect, the measuring portion 12 on the body 10 can further allow the dentists to measure relative position and distance of the patient's face, such as biometric features, to provide the basis for subsequent related medical diagnosis. Further, with reference to Fig. 7, in the first embodiment of the present invention, in a process of dental implantation, the data obtained by the dentist through X-ray film or tomography, each referenced point in the patient's oral cavity (for example: the relative position of the adjacent teeth 50, etc.) is measured and positioned for subsequent drilling or implantation of dental implants 80 via the measuring portion 12 of the body 10 and the actual situation inside the patient's oral cavity.

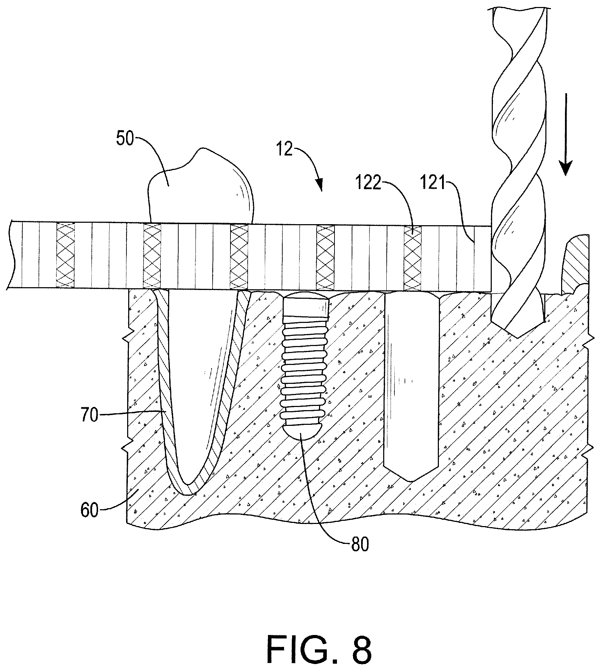

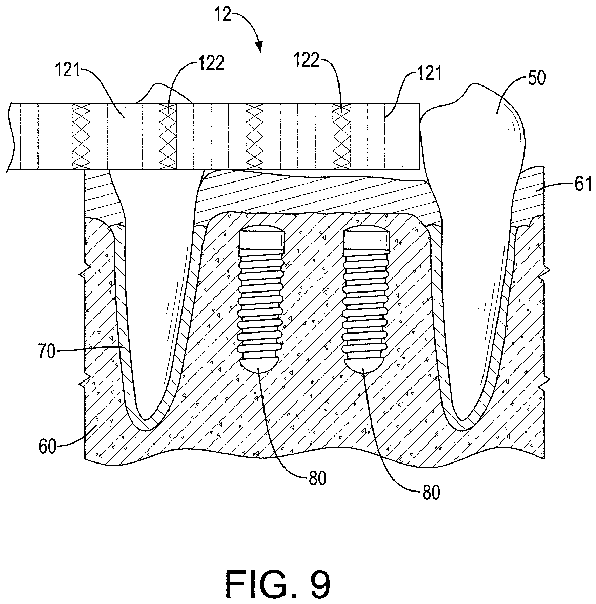

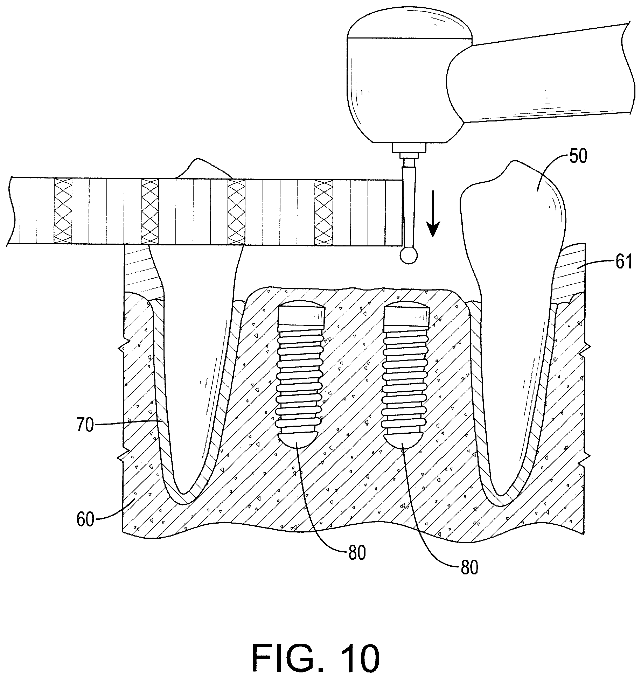

Additionally, after the dentist inspects and measures the position of the teeth 50 in the patient's oral cavity as shown in Fig. 7, the explorer can be used in multiple surgical stages of subsequent dental implants. With reference to Fig. 8, a healthy tooth 50 is used as a reference, and the graduated scale 121 and the mark 122 of the measuring portion 12 of the body 10 are used to measure and locate a position to be drilled. After drilling, the dental implant 80 is implanted in the drilled hole (the first operation stage), whereby the drilling and the implantation of the dental implants 80 are performed (in an order from right to left in Fig. 8 ). Additionally, after the dental implants 80 are implanted and the bone graft is filled, the filled bone graft will grow new bone on the alveolar bone 60 as shown in Fig. 9 and may completely cover upper surfaces and outsides of the dental implants 80. With reference to Fig. 10, when the dentist wants to combine dental crowns with the dental implants 80, the dentist can accurately locate the positions of each one of the dental implants 80 via the measuring portion 12 on the body 10 (the second operation stage), and can avoid cutting or drilling the positions that do not correspond to the dental implants 80. It not only can improve the surgical quality of implant, but also can accurately combine the dental crowns with the dental implants 80, so that the explorer of the present invention can have dual effects of detection and measurement, and can replace the use of the conventional surgical guides, thereby providing the effects of convenient use and cost saving.

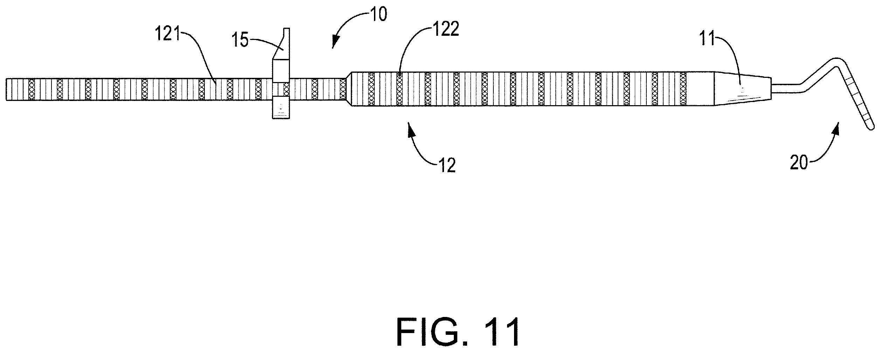

With reference to Fig. 11, a second embodiment of a dental tool in accordance with the present invention is substantially the same as the first embodiment as shown in Figs. 1 to 4 except for the following features. In the second embodiment of the present invention, the body 10 has a cursor element 15 mounted around one of the two rod portions 13, and the cursor element 15 can be moved relative to the corresponding rod portion 13 and can be aligned with one of the graduated scales 121 or the marks 122 to allow users to clearly read the corresponding size values.

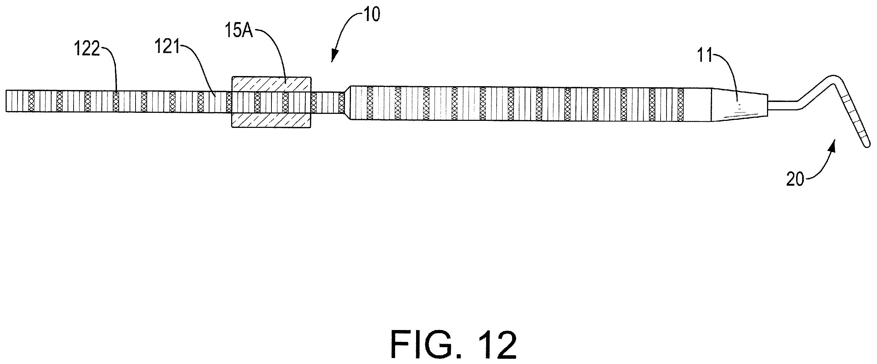

With reference to Fig. 12, a third embodiment of a dental tool in accordance with the present invention is substantially the same as the second embodiment as shown in Fig. 11 except for the following features. In the third embodiment of the present invention, the cursor element 15A is a tube mounted around the body 10, and a user can measure sizes by moving the tube relative to the body10. In the second and third embodiments of the present inventions, the cursor elements 15, 15A can abut against reference points such as a heathy tooth 50 or a dental implant 80 as shown in Figs. 7 and 8 to provide the effect of positioning and measurement.

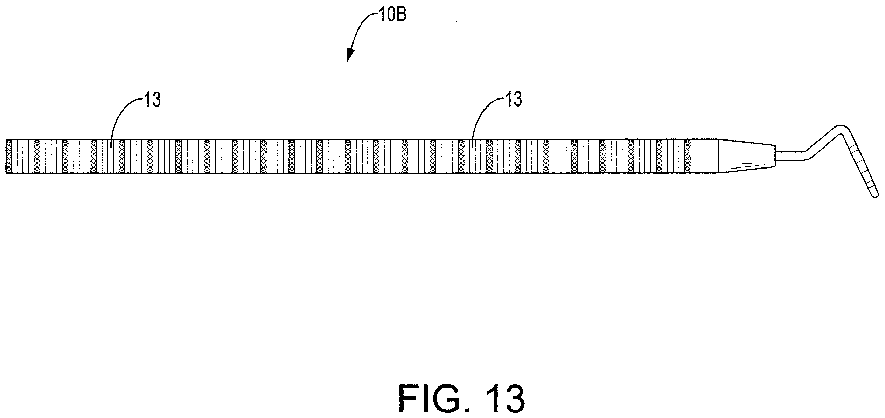

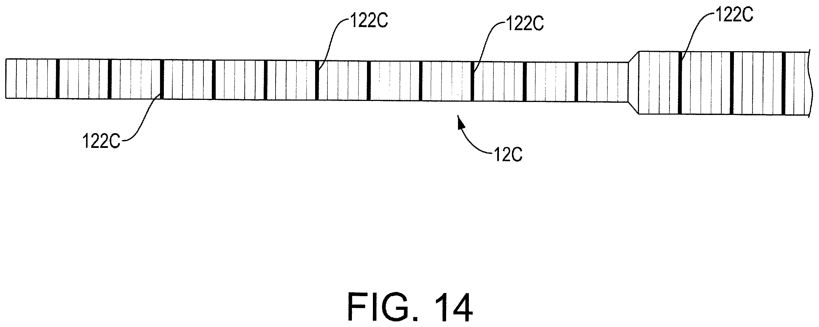

With reference to Fig. 13, a fourth embodiment of a dental tool in accordance with the present invention is substantially the same as the first embodiment as shown in Figs. 1 to 4 except for the following features. In the fourth embodiment of the present invention, the two rod portions 13B of the body 10B have equal outer diameters such that the body 10B has a single outer diameter. With reference to Fig. 14, a fifth embodiment of a dental tool in accordance with the present invention is substantially the same as the first embodiment as shown in Figs. 1 to 4 except for the following features. In the fifth embodiment of the present invention, each mark 122C of the measuring portion 12C is a bold notch. In addition, with reference to Fig. 15, in the fifth embodiment of the present invention, each mark 122C has a number mark 123C to allow users to quickly get corresponding size values.

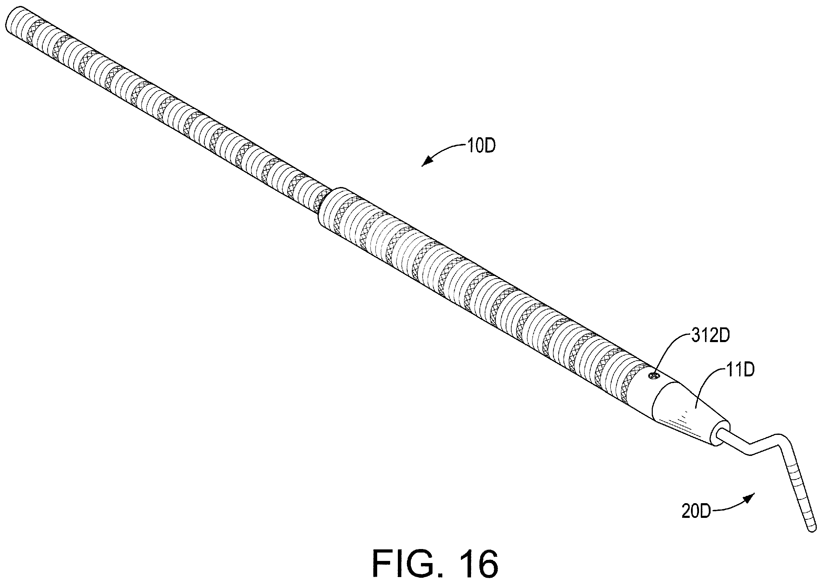

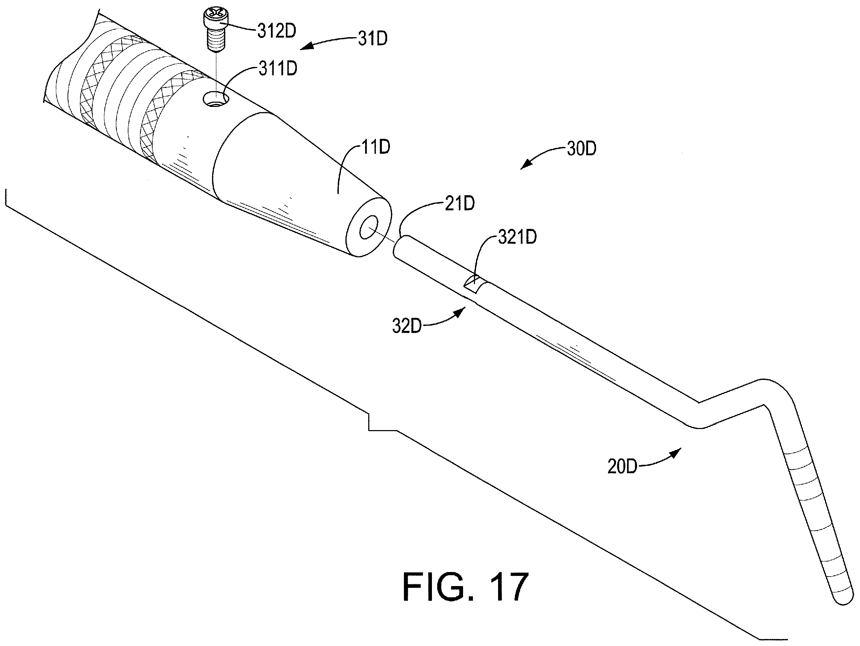

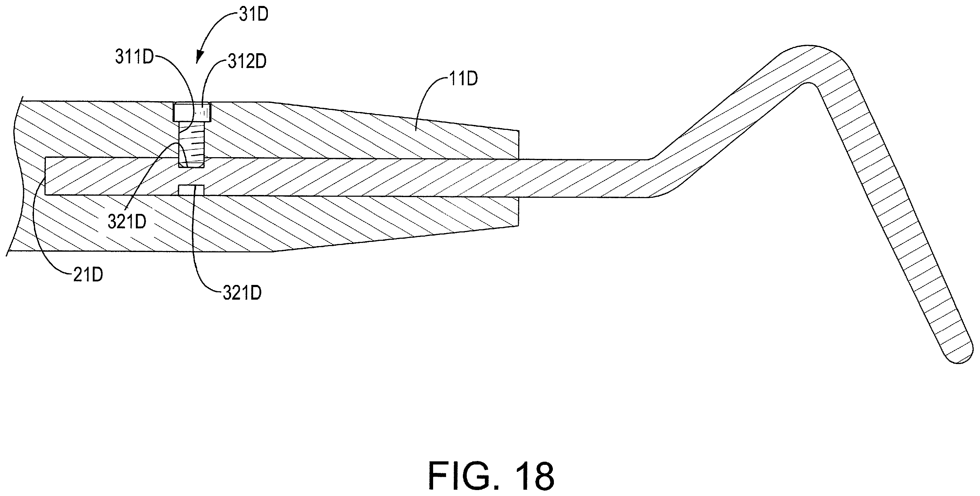

With reference to Figs. 16 to 18, a sixth embodiment of a dental tool in accordance with the present invention is substantially the same as the first embodiment as shown in Figs. 1 to 4 except for the following features. In the sixth embodiment of the present invention, the dental tool has a fixing mechanism 30D disposed between the body 10D and the working element 20D, and the fixing mechanism 30D has a fixing unit 31D and an engaging unit 32D. The fixing unit 31D is disposed on the connecting portion 11D of the body 10D and has a fixing hole 311D and a fixing element 312D. The fixing hole 311D is radially formed in the connecting portion 11D and communicates with an interior of the connecting portion 11D. The fixing element 312D is connected to the fixing hole 311D and extends into the interior of the connecting portion 11D. The engaging unit 32D is disposed on the working element 20D adjacent to the connecting end 21D and has at least one engaging face 321D. The at least one engaging face 321D is formed on an external surface of the working element 20D, extends into the interior of the connecting portion 11D via the connecting end 21D, and aligns with the fixing hole 311D. The fixing element 312D engages with the at least one engaging face 321D via the fixing hole 311D. Then the working element 20D is securely connected to the body 10 by the fixing mechanism 30D. Preferably, the engaging unit 32D has two engaging faces 321D parallelly formed on the external surface of the working element 20D, and the fixing element 312D engages with one of the two engaging faces 321D.

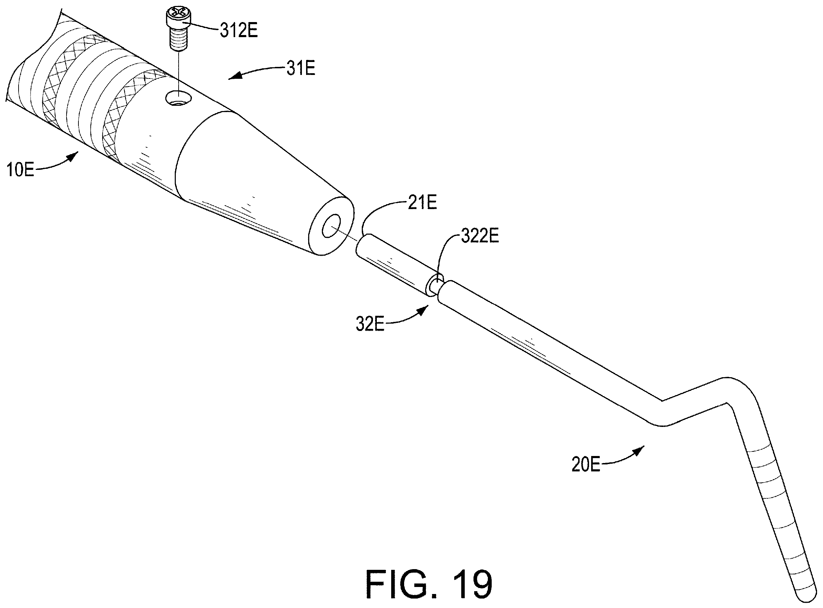

With reference to Fig. 19, a seventh embodiment of a dental tool in accordance with the present invention is substantially the same as the sixth embodiment as shown in Figs. 16 to 18 except for the following features. In the seventh embodiment of the present invention, the engaging unit 32E has an engaging annular face 322E formed on the external surface of the working element 20E adjacent to the working end 21E, and the fixing element 312E of the fixing unit 31E engages with the engaging annular face 322E to connect the working element 20E securely with the body 10E.

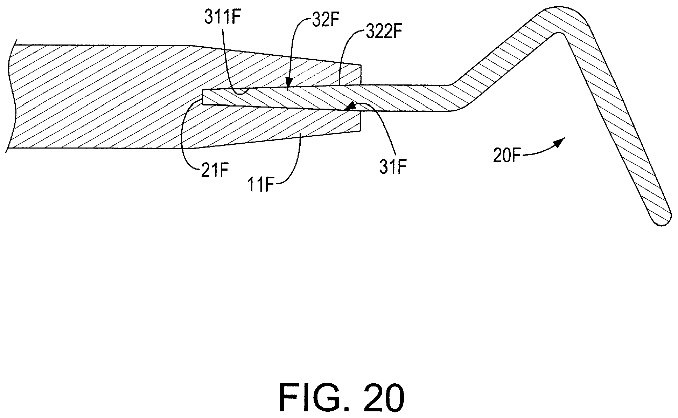

With reference to Fig. 20, an eighth embodiment of a dental tool in accordance with the present invention is substantially the same as the sixth embodiment as shown in Figs. 16 to 18 except for the following features. In the eighth embodiment of the present invention, the fixing hole 311F of the fixing unit 31F is axially formed in the connecting portion 11F and is a tapered groove that gradually expands from the inside to the outside. The engaging unit 32F is disposed on the external surface of the working element 20F adjacent to the connecting end 21F and has a tapered engaging annular face 322F engaged with the fixing hole 311F. In addition, the tapered engaging annular face 322F can be securely connected to the fixing hole 311F by laser welding, arc welding, electron beam welding, friction welding, copper-tin welding, interference combination of thermal expansion and cold contraction or coating of adhesives.

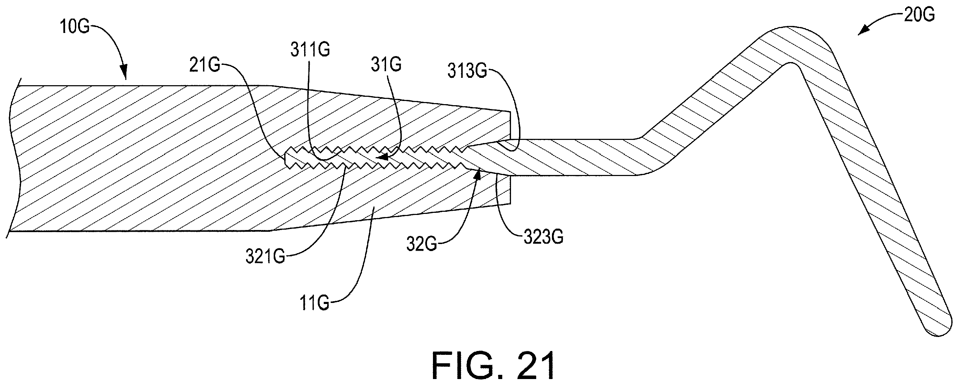

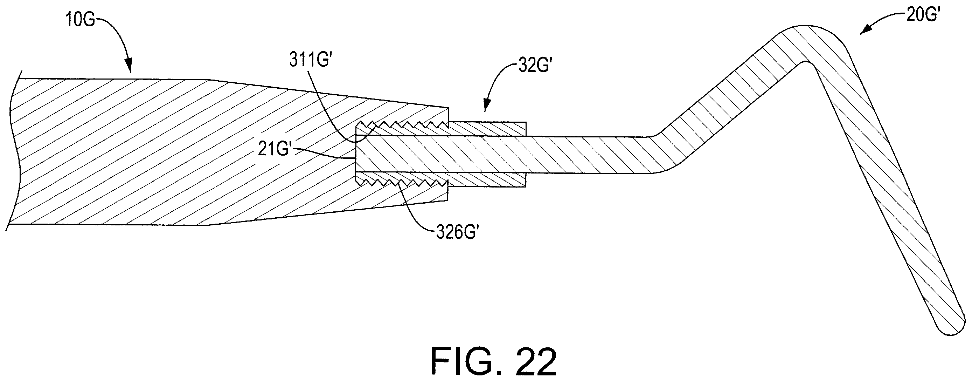

With reference to Fig. 21, a ninth embodiment of a dental tool in accordance with the present invention is substantially the same as the eighth embodiment as shown in Fig. 20 except for the following features. In the ninth embodiment of the present invention, the fixing unit 31G has a fixing hole 311G and an engaging recess 313G. The fixing hole 311G is axially formed in the connecting portion 11G of the body 10G, and the engaging recess 313G is formed at an opening of the fixing hole 311G and is an annular recess that gradually expands from the inside to the outside. The engaging unit 32G has an engaging face 321G and an engaging portion 323G. The engaging face 321G is formed on the external surface of the working element 20G adjacent to the connecting end 21G and is screwed with the fixing hole 311G. The engaging portion 323G is formed on the external surface of the working element 20G away from the connecting end 21G and abuts against the engaging recess 313G. Then the working element 20G is securely connected to the body 10G without shaking. Preferably, with reference to Fig. 22, the engaging unit 32G' is a hollow tube and has a fixing section 326G' formed on an external surface of the engaging unit 32G' at an end of the engaging unit 32G' and screwed with the fixing hole 311G'. The connecting end 21G' of the working element 20G' is inserted into and securely connected to the engaging unit 32G' by welding (such as laser welding, arc welding, electron beam welding, friction welding, or copper-tin welding), adhesive bonding or negative tolerance interference fit.

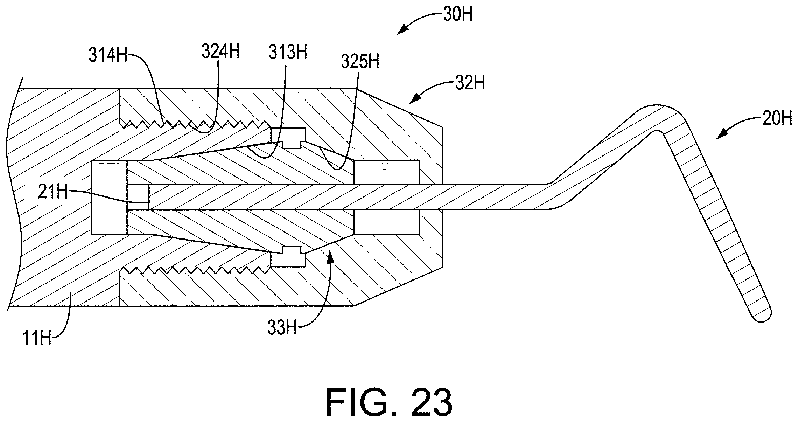

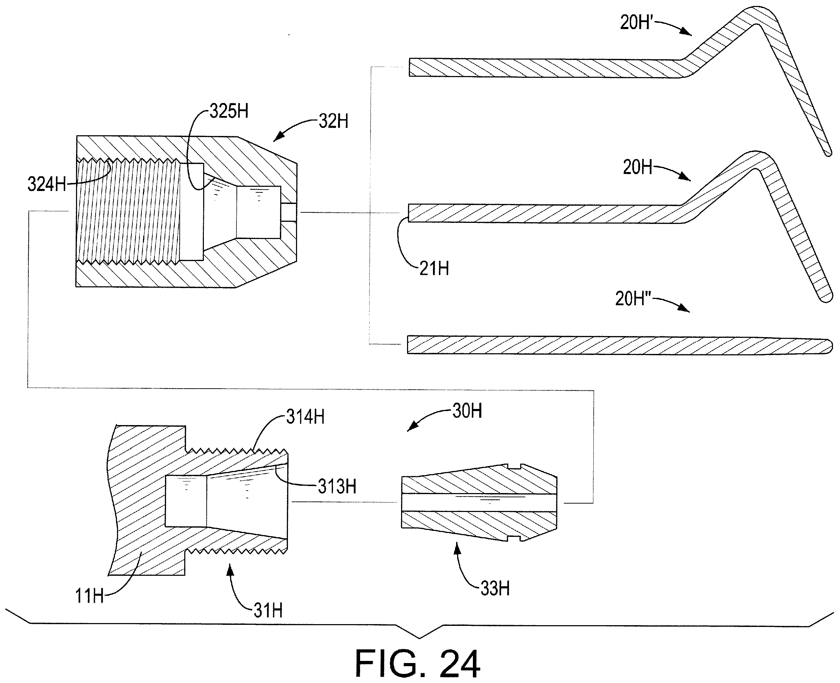

With reference to Figs. 23 and 24, a tenth embodiment of a dental tool in accordance with the present invention is substantially the same as the sixth embodiment as shown in Figs. 16 to 18 except for the following features. In the tenth embodiment of the present invention, the fixing unit 31H has a fixing face 314H and an engaging recess 313H, the fixing face 314H is formed on an external surface of the connecting portion 11H, the engaging recess 313H is axially formed in the connecting portion 11H, and the fixing face 314H is disposed around an exterior of the engaging recess 313H. The engaging unit 32H is mounted around the fixing unit 31H and has a fixing recess 324H and a clamping recess 325H. The fixing recess 324H is formed in the engaging unit 32H and is securely connected to the fixing face 314H. The clamping recess 325H is formed in the engaging unit 32H and communicates with the fixing recess 324H.

Furthermore, the fixing mechanism 30H has a pressing unit 33H disposed between the fixing unit 31H and the engaging unit 32H. The pressing unit 33H may be a collet, is disposed in the engaging recess 313H, and abuts against the clamping recess 325H. The connecting end 21H of the working element 20H engages with the pressing unit 33H via the fixing unit 31H and the engaging unit 32H. Preferably, with reference to Fig. 24, according to the arrangement between the fixing unit 31H, the engaging unit 32H, and the pressing unit 33H, different types of working elements 20H, 20H', 20H" are securely connected to the fixing mechanism 30H, and this allows users to replace a corresponding working element 20H, 20H', 20H" according to the needs.

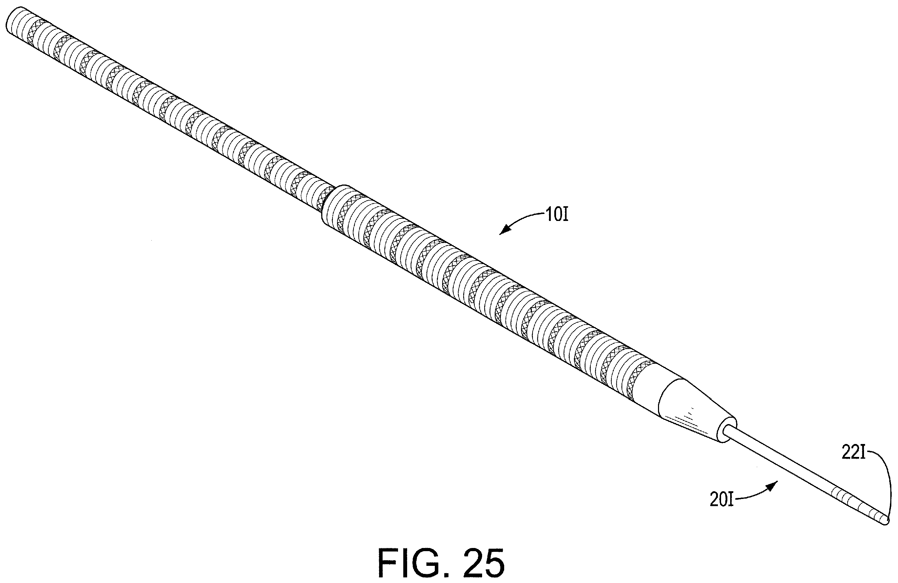

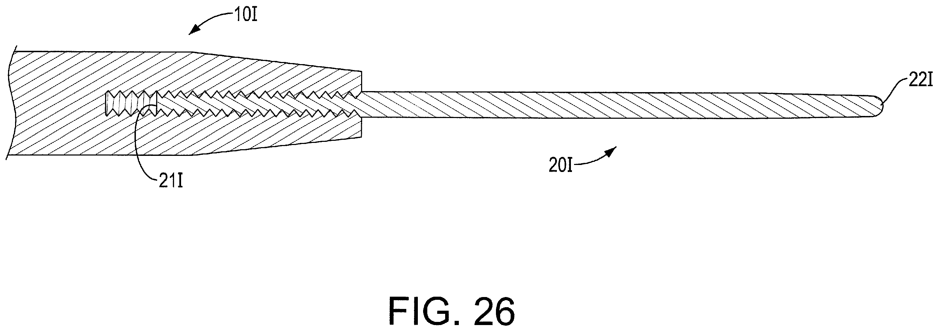

With reference to Figs. 25 and 26, an eleventh embodiment of a dental tool in accordance with the present invention is substantially the same as the first embodiment as shown in Figs. 1 to 4 except for the following features. In the eleventh embodiment of the present invention, the working element 20I does not have a curved portion (or the included angle of the curved portion is 0 degree), the connecting end 21I is in a straight line with the working end 22I, and the working element 20I is connected to the body 10I by thread.

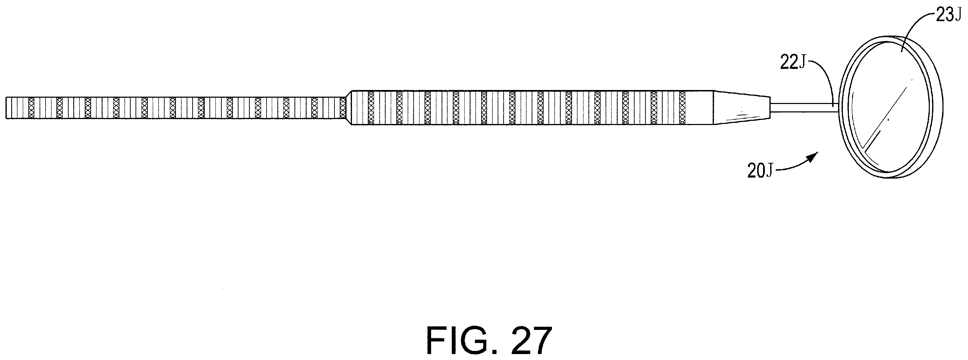

With reference to Fig. 27, a twelfth embodiment of a dental tool in accordance with the present invention is substantially the same as the first embodiment as shown in Figs. 1 to 4 except for the following features. In the twelfth embodiment of the present invention, the dental tool is a dental mirror, and the working element 20J has a mirror 23J disposed on the working end 22J.

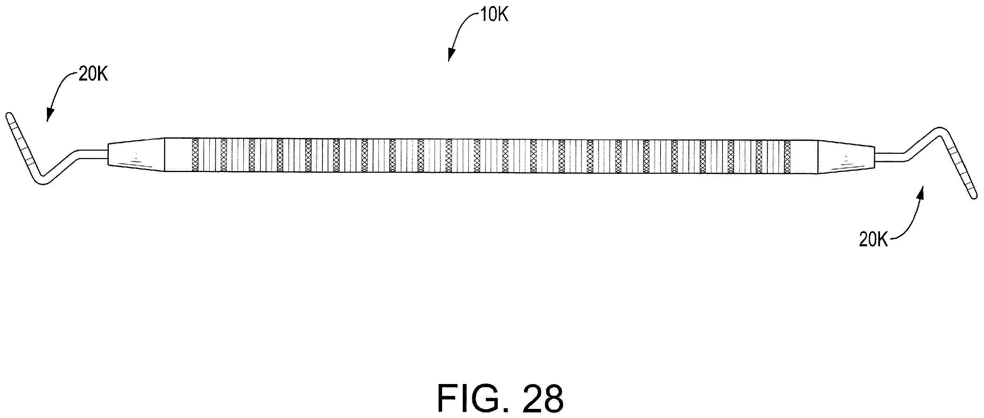

With reference to Fig. 28, a thirteenth embodiment of a dental tool in accordance with the present invention is substantially the same as the fourth embodiment as shown in Fig. 13 except for the following features. In the thirteenth embodiment of the present invention, two working elements 20K are respectively disposed on two ends of the body 10K, and the two working elements 20K can be curved in the same direction or different directions. In addition, each working element 20K may be straight without having a curved portion. Preferably, each working element 20K may be connected to the body 10K by the structures as described in the above-mentioned embodiments and are not to be described in detail.

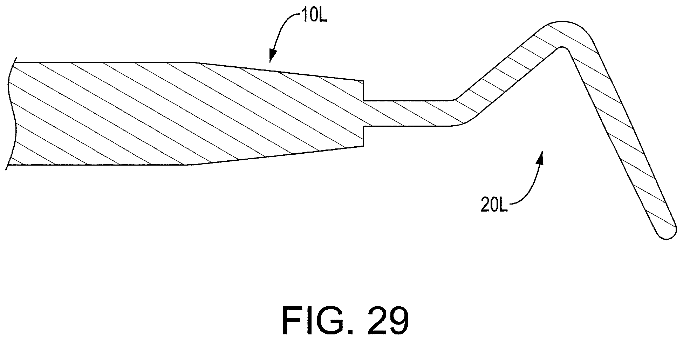

With reference to Fig. 29, a fourteenth embodiment of a dental tool in accordance with the present invention is substantially the same as the first embodiment as shown in Fig. 1 except for the following features. In the fourteenth embodiment of the present invention, the body 10L and the working element 20L are made as a single piece with same material. For example, the dental tool may be made by integrally injection molded through plastic or cast with metal materials. Furthermore, the body 10L may be made of plastic, and the working element 20L may be made of plastic or metal.

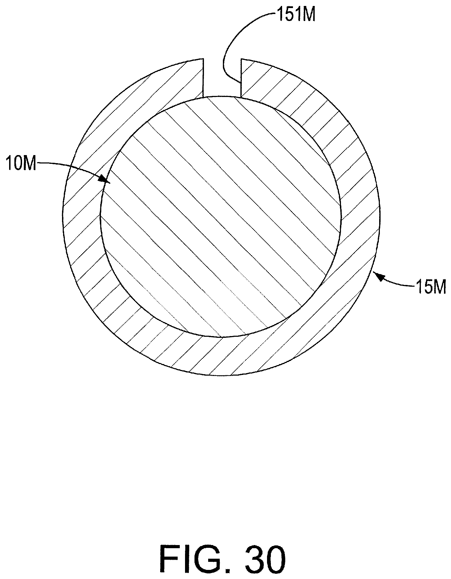

With reference to Fig. 30, a fifteenth embodiment of a dental tool in accordance with the present invention is substantially the same as the third embodiment as shown in Fig. 12 except for the following features. In the fifteenth embodiment of the present invention, the cursor element 15M is a hollow ring, is mounted around the body 10M, and has a gap 151M. A user can measure by pushing the cursor element 15M to move relative to the body 10M.

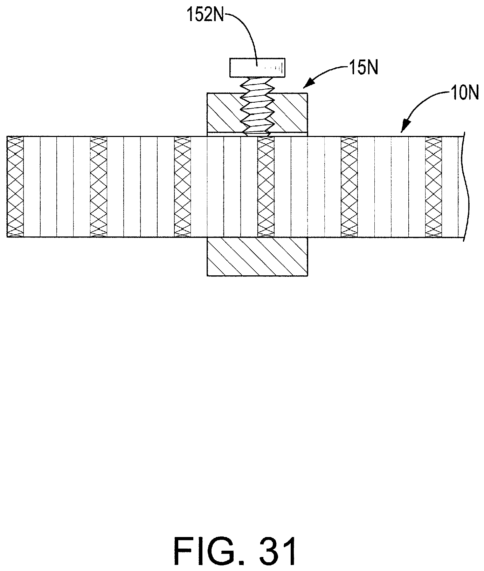

With reference to Fig. 31, a sixteenth embodiment of a dental tool in accordance with the present invention is substantially the same as the third embodiment as shown in Fig. 12 except for the following features. In the sixteenth embodiment of the present invention, the cursor element 15N has a positioning element 152N radially formed through the cursor element 15N to abut against the external surface of the body 10N, and this allows a user to fix the cursor element 15N on a specific location of the body 10N for measurement via the positioning element 152N abutting against the external surface of the body 10N. Preferably, the positioning element 152N is connected to the cursor element 15N by thread.

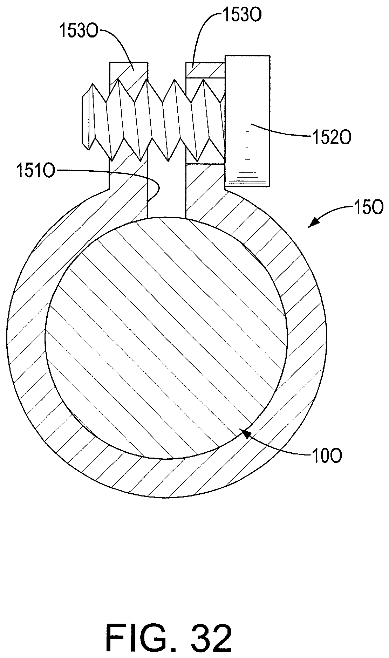

With reference to Fig. 32, a seventeenth embodiment of a dental tool in accordance with the present invention is substantially the same as the fifteenth embodiment as shown in Fig. 30 except for the following features. In the seventeenth embodiment of the present invention, the cursor element 150 has two extending slices 1530 respectively formed on and protruded outwardly from two sides of the gap 1510 and parallel to each other. The positioning element 1520 is transversally extended through one of the two extending slices 1530 and is connected to the other one of the two extending slices 1530, and a distance between the two extending slices 1530 can be changed by the positioning element 1520 to enable the cursor element 150 to press against the body 10O. Then the cursor element 150 can be positioned at a specific location of the body 10O.

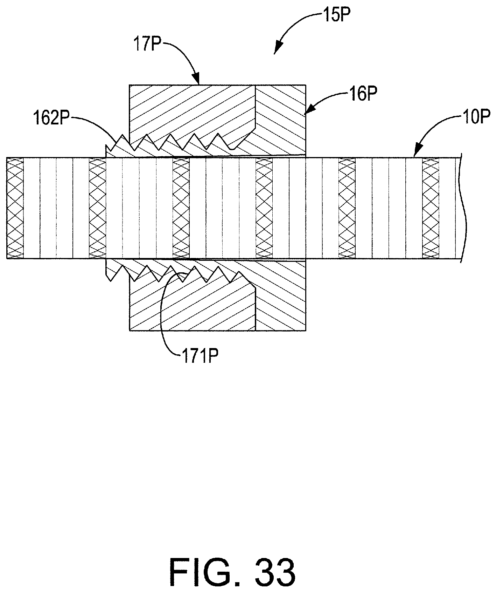

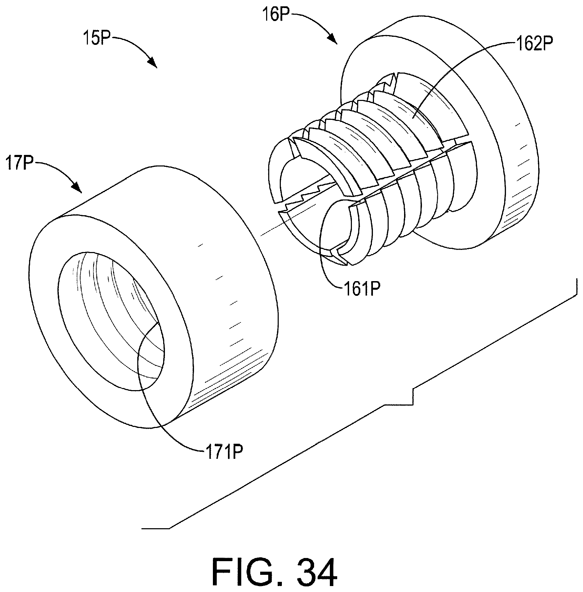

With reference to Figs. 33 and 34, an eighteenth embodiment of a dental tool in accordance with the present invention is substantially the same as the third embodiment as shown in Fig. 12 except for the following features. In the eighteenth embodiment of the present invention, the cursor element 15P has a positioning element, and the positioning element has a pressing sleeve 16P and a threaded tube 17P. The pressing sleeve 16P is movably mounted on the body 10P and has multiple cutting slices 161P and a screwed portion 162P. The cutting slices 161P are axially formed through an external surface of the pressing sleeve 16P at spaced intervals to enable the pressing sleeve 16P to deform to approach or move away from the body 10P. The screwed portion 162P is formed on the external surface of the pressing sleeve 16P. The threaded tube 17P is connected to the pressing sleeve 16P, is disposed on the body 10P, and has a threaded portion 171P formed on an inner surface of the threaded tube 17P and connected to the screwed portion 162P of the pressing sleeve 16P. The size of each one of the cutting slices 161P can be changed by the threaded portion 171P screwed with the screwed portion 162P, and this enables the pressing sleeve 16P to abut against the external surface of the body 10P to locate the cursor element 15P on the body 10P to provide a measuring effect.

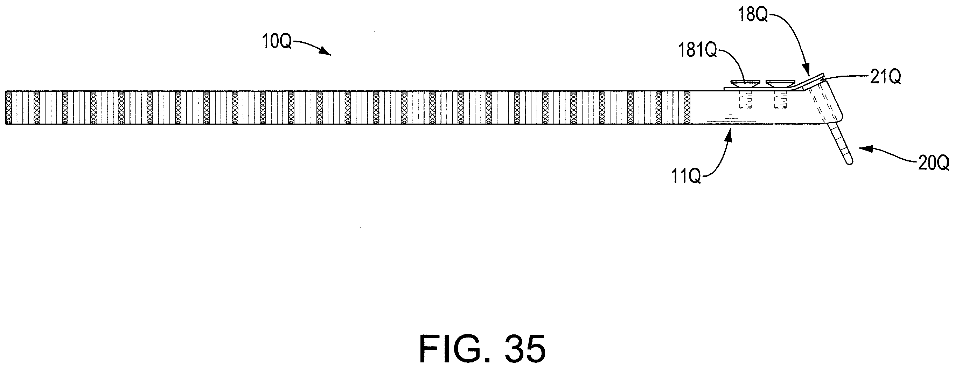

With reference to Fig. 35, a nineteenth embodiment of a dental tool in accordance with the present invention is substantially the same as the fourth embodiment as shown in Fig. 13 except for the following features. In the nineteenth embodiment of the present invention, the body 10Q has a buffering element 18Q, the buffering element 18Q is an elastic sheet, and an end of the buffering element 18Q steadily abuts the external surface of the connecting portion 11Q. The working element 20Q is disposed in the connecting portion 11Q, and the connecting end 21Q of the working element 20Q abuts against another end of the buffering element 18Q to connect the working element 20Q on the connecting portion 11Q of the body 10Q. In addition, the elastic buffering element 18Q can provide the working element 20Q with a buffering effect during use, so as to avoid pain or discomfort to the patient during the detection and treatment process.

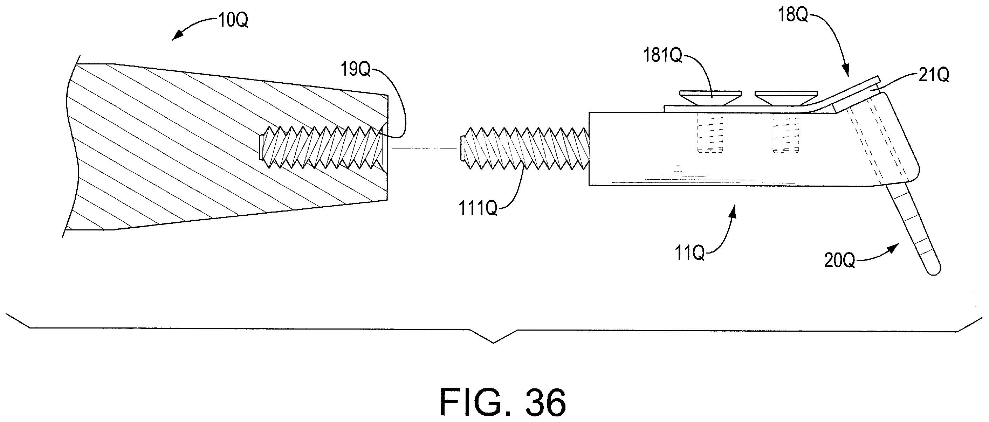

With reference to Fig. 36, a twentieth embodiment of a dental tool in accordance with the present invention is substantially the same as the nineteenth embodiment as shown in Fig. 35 except for the following features. In the twentieth embodiment of the present invention, the connecting portion 11Q is detachably connected to the body 10Q and has a connecting rod 111Q formed on and protruded from an end of the connecting portion 11Q away from the working element 20Q. The connecting rod 111Q has a thread formed on an external surface thereof, and the body 10Q has a connecting recess 19Q connected to the connecting rod 111Q. Then the connecting portion 11Q can be detachably connected to the body 10Q.

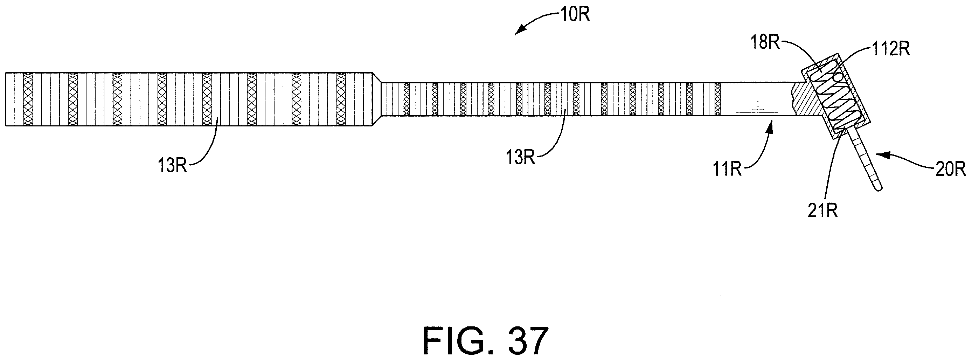

With reference to Fig. 37, a twenty-first embodiment of a dental tool in accordance with the present invention is substantially the same as the nineteenth embodiment as shown in Fig. 35 except for the following features. In the twenty-first embodiment of the present invention, the two rod portions 13R of the body 10R have different outer diameters, the connecting portion 11R has a hollow chamber 112R, and the buffering element 18R is mounted in the chamber 112R and is a spring. The connecting end 21R of the working element 20R is mounted in the chamber 112R and abuts against the buffering element 18R. The working element 20R can move relative to the connecting portion 11R and extend into the chamber 112R during use via the elastic buffering of the buffering element 18R. Then the dental tool can provide a buffering effect.

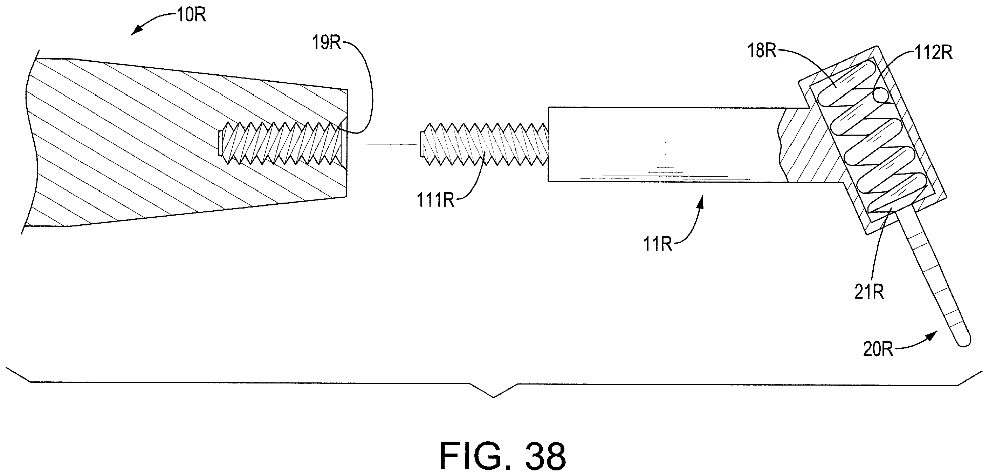

With reference to Fig. 38, a twenty-second embodiment of a dental tool in accordance with the present invention is substantially the same as the twenty-first embodiment as shown in Fig. 37 except for the following features. In the twenty-second embodiment of the present invention, the connecting portion 11R is detachably connected to the body 10R and has a connecting rod 111R formed on and protruded from an end of the connecting portion 11R away from the working element 20R. The connecting rod 111R has a thread formed on an external surface thereof, and the body 10R has a connecting recess 19R connected to the connecting rod 111R. Then the connecting portion 11R can be detachably connected to the body 10R.

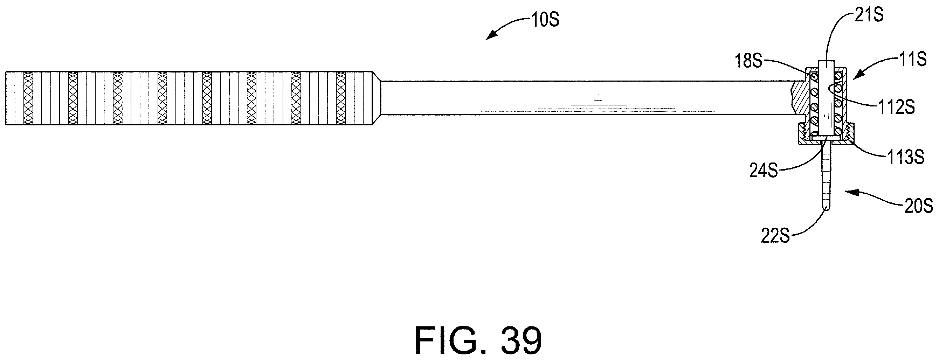

With reference to Fig. 39, a twenty-third embodiment of a dental tool in accordance with the present invention is substantially the same as the twenty-first embodiment as shown in Fig. 37 except for the following features. In the twenty-second embodiment of the present invention, the connecting portion 115 of the body 10S has a cover 113S disposed below the chamber 112S, and the buffering element 18S is mounted in the chamber 112S and is a spring. The working element 20S has an annular flange 24S formed between the connecting end 21S and the working end 22S and disposed in the chamber 112S. The annular flange 24S abuts the cover 113S and the buffering element 18S. The working element 20S can be moved in the chamber 112S relative to the connecting portion 11S via the buffering element 18S abutting the annular flange 24S, and this enables the dental tool to provide a buffering effect.

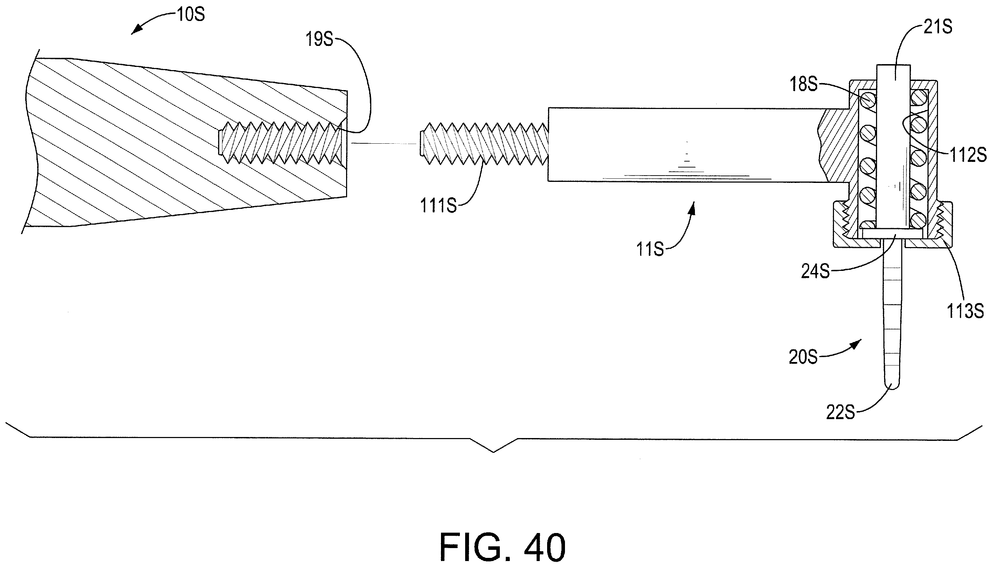

With reference to Fig. 40, a twenty-fourth embodiment of a dental tool in accordance with the present invention is substantially the same as the twenty-third embodiment as shown in Fig. 39 except for the following features. In the twenty-fourth embodiment of the present invention, the connecting portion 11S is detachably connected to the body 10S and has a connecting rod 111S formed on and protruded from an end of the connecting portion 11S away from the working element 20S. The connecting rod 111S has a thread formed on an external surface thereof, and the body 10S has a connecting recess 19S connected to the connecting rod 111S. Then the connecting portion 11S can be detachably connected to the body 10S.

In the above-mentioned embodiments of the present invention, the fixing mechanism 30D, 30H is disposed between the body 10, 10B, 10D, 10E, 10G, 10I, 10K, 10M, 10N, 10O, 10P, 10Q, 10R, 10S and the working element 20, 20D, 20E, 20G, 20G', 20H, 20I, 20J, 20K, 20L, 20Q, 20R, 20S, and this allows users to replace the working element 20, 20D, 20E, 20G, 20G', 20H, 201, 20J, 20K, 20L, 20Q, 20R, 20S with different sizes, structural strength, elasticity or shapes according to the users' needs to improve the practicability and applicability of the dental tool of the present invention.

According to the above-mentioned features and structural relationships of the dental tool of the present invention, the dental tool of the present invention can provide a detection effect via the working element 20, 20D, 20E, 20G, 20G', 20H, 20I, 20J, 20K, 20L, 20Q, 20R, 20S, and can use the working element 20, 20D, 20E, 20G, 20G, 20G', 20H, 20H', 20H", 201, 20J, 20K, 20L, 20Q, 20R, 20S that is made of shape memory alloy, stainless steel, titanium alloy, platinum or tungsten to effectively avoid excessive force making patients feel uncomfortable during diagnosis. When the dental tool falls to the ground or collides with other objects, the working ends 22, 22I, 22J, 22S of the working element 20, 20D, 20E, 20F, 20G, 20G, 20G', 20H, 20H', 20H", 20I, 20J, 20K, 20L, 20Q, 20R, 20S can respond to external forces and return to the original state after elastic bending or deformation without affecting the situation of subsequent reuse.

Furthermore, the working element 20, 20D, 20E, 20F, 20G, 20G', 20H, 20H', 20H", 20I, 20J, 20K, 20L, 20Q, 20R, 20S with super-elastic physical properties can avoid puncturing the sinus membrane and the related problems that follow. In addition, the measuring portion 12, 12C disposed on the body 10, 10B, 10D, 10E, 10G, 10I, 10K, 10M, 10N, 10O, 10P, 10Q, 10R, 10S allows the dental tool of the present invention to measure and locate relative positions of the teeth 50 in the patient's mouth, so as to accurately perform subsequent drilling or implantation of dental implants 80. This operation can improve the surgical quality of dental implants, and can replace the use of conventional surgical guides to provide a convenient use and cost-saving effect.

Additionally, the body 10L and the work piece 20L can be made of plastic or metal and can be made as a single piece. Furthermore, the fixing mechanism 30D, 30H is disposed between the body 10, 10B, 10D, 10E, 10G, 10I, 10K, 10L, 10M, 10N, 10O, 10P, 10Q, 10R, 10S and the working element 20, 20D, 20E, 20F, 20G, 20G', 20H, 20H', 20H", 20I, 20J, 20K, 20L, 20Q, 20R, 20S, and this allows users to replace working elements 20, 20D, 20E, 20F, 20G, 20G', 20H, 20H', 20H", 20I, 20J, 20K, 20L, 20Q, 20R, 20S with different sizes, materials, structural strength, elasticity or shapes according to the users' needs. Then the practicability and applicability of the dental tool of the present invention can be improved, thereby providing a dental tool with measurement effect, improved detection experience, and convenient use.

Furthermore, the third embodiment, the fifth embodiment to twelfth embodiment, the nineteenth embodiment, the twentieth embodiment, and the twenty-second embodiment to twenty fourth embodiment and corresponding Figs. 12, 13, 16 to 27, 35, 36, and 38 to 40 in the description of the present invention are not encompassed by the wording of the claims but are considered useful for understanding the invention.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A dental tool comprising:
a body (10, 10B, 10D, 10E, 10G, 10I, 10K, 10L, 10M, 10N, 10O, 10P, 10Q, 10R, 10S) having
a connecting portion (11, 11D, 11F, 11H, 11Q, 11R, 11S) disposed on an end of the body (10, 10B, 10D, 10E, 10G, 10I, 10K, 10L, 10M, 10N, 10O, 10P, 10Q, 10R, 10S); and
a measuring portion (12, 12C) formed on an external surface of the body (10, 10B, 10D, 10E, 10G, 10I, 10K, 10L, 10M, 10N, 10O, 10P, 10Q, 10R, 10S) opposite to the connecting portion (11, 11D, 11F, 11H, 11Q, 11R, 11S) and having
a graduated scale (121) formed on the external surface of the body (10) every 1 millimeter; and
a mark (122, 122C) formed on the external surface of the body (10) every 5 millimeters;
a working element (20, 20D, 20E, 20F, 20G, 20G', 20H, 20H', 20H", 201, 20J, 20K, 20L, 20Q, 20R, 20S) connected to the body (10, 10B, 10D, 10E, 10G, 10I, 10K, 10L, 10M, 10N, 10O, 10P, 10Q, 10R, 10S) and having
a connecting end (21, 21D, 21E, 21F, 21G, 21G', 21H, 211, 21Q, 21R, 21S) connected to the connecting portion (11, 11D, 11F, 11H, 11Q, 11R, 11S) of the body (10, 10B, 10D, 10E, 10G, 10I, 10K, 10L, 10M, 10N, 10O, 10P, 10Q, 10R, 10S); and
a working end (22, 221, 22J, 22S) connected to the connecting end (21, 21D, 21E, 21F, 21G, 21G', 21H, 211, 21Q, 21R, 21S) of the working element (20, 20D, 20E, 20F, 20G, 20G', 20H, 20H', 20H", 201, 20J, 20K, 20L, 20Q, 20R, 20S) and extended out of the connecting portion (11, 11D, 11F, 11H, 11Q, 11R, 11S) of the body (10, 10B, 10D, 10E, 10G, 10I, 10K, 10L, 10M, 10N, 10O, 10P, 10Q, 10R, 10S),
wherein the body (10N) has a cursor element (15N) movably mounted around the body (10N) and aligning with one of the graduated scales (121) or the marks (122) of the measuring portion (12); and
the cursor element (15N) has a positioning element (152N) radially formed through the cursor element (15N) to abut against the external surface of the body (10N).

2. The dental tool as claimed in claim 1, wherein a number mark (123C) is formed on the external surface of the body (10) at each mark (122C) of the measuring portion (12C).

3. The dental tool as claimed in claim 1, wherein each mark (122, 122C) of the measuring portion (12, 12C) is a mesh notch or an obvious trace notch.

4. The dental tool as claimed in claim 1, wherein each mark (122, 122C) of the measuring portion (12, 12C) is a bold notch.

5. The dental tool as claimed in any one of claims 1 to 4, wherein the cursor element (15A) is a tube mounted around the body (10).

6. The dental tool as claimed in any one of claims 1 to 4, wherein
the body (10) has two rod portions (13);
the two rod portions (13) are connected to each other and have different outer diameters and a stepped face (14) is formed at a connecting location between the two rod portions (13); and
the measuring portion (12) is formed on outer surfaces of the two rod portions (13).

7. The dental tool as claimed in any one of claims 1 to 4, wherein
the body (10R) has two rod portions (13R); and
the two rod portions (13R) are connected to each other and have equal outer diameters such that the body (10R) has a single outer diameter.

8. The dental tool as claimed in any one of claims 1 to 4, wherein the dental tool has
two said connecting portions (11) respectively formed on two ends of the body (10K, 10L); and
two said working elements (20K, 20L) respectively connected to the two said connecting portions (11).

## Patentansprüche

1. Zahnmedizinisches Werkzeug, das Folgendes umfasst:
einen Körper (10, 10B, 10D, 10E, 10G, 10I, 10K, 10L, 10M, 10N, 10O, 10P, 10Q, 10R, 10S), der Folgendes aufweist:
einen Verbindungsabschnitt (11, 11D, 11F, 11H, 11Q, 11R, 11S), der an einem Ende des Körpers (10, 10B, 10D, 10E, 10G, 10I, 10K, 10L, 10M, 10N, 10O, 10P, 10Q, 10R, 10S) angeordnet ist, und
einen Messungsabschnitt (12, 12C), der auf einer Außenfläche des Körpers (10, 10B, 10D, 10E, 10G, 10I, 10K, 10L, 10M, 10N, 10O, 10P, 10Q, 10R, 10S), entgegengesetzt zu dem Verbindungsabschnitt (11, 11D, 11F, 11H, 11Q, 11R, 11S), geformt ist und Folgendes aufweist:
eine abgestufte Skala (121), die auf der Außenfläche des Körpers (10) alle 1 Millimeter geformt ist, und
eine Markierung (122, 122C), die auf der Außenfläche des Körpers (10) alle 5 Millimeter geformt ist,
ein Arbeitselement (20, 20D, 20E, 20F, 20G, 20G', 20H, 20H', 20H'', 20I, 20J, 20K, 20L, 20Q, 20R, 20S), das mit dem Körper (10, 10B, 10D, 10E, 10G, 10I, 10K, 10L, 10M, 10N, 10O, 10P, 10Q, 10R, 10S) verbunden ist und Folgendes aufweist:
ein Verbindungsende (21, 21D, 21E, 21F, 21G, 21G', 21H, 21I, 21Q, 21R, 21S), das mit dem Verbindungsabschnitt (11, 11D, 11F, 11H, 11Q, 11R, 11S) des Körpers (10, 10B, 10D, 10E, 10G, 10I, 10K, 10L, 10M, 10N, 10O, 10P, 10Q, 10R, 10S) verbunden ist, und
ein Arbeitsende (22, 22I, 22J, 22S), das mit dem Verbindungsende (21, 21D, 21E, 21F, 21G, 21G', 21H, 21I, 21Q, 21R, 21S) des Arbeitselements (20, 20D, 20E, 20F, 20G, 20G', 20H, 20H', 20H'', 20I, 20J, 20K, 20L, 20Q, 20R, 20S) verbunden ist und sich aus dem Verbindungsabschnitt (11, 11D, 11F, 11H, 11Q, 11R, 11S) des Körpers (10, 10B, 10D, 10E, 10G, 10I, 10K, 10L, 10M, 10N, 10O, 10P, 10O, 10R, 10S) erstreckt,
wobei
der Körper (10N) ein Gleitzeigerelement (15N) aufweist, das beweglich um den Körper (10N) angebracht ist und sich mit einem von den abgestuften Skalen (121) oder den Markierungen (122) des Messungsabschnitts (12) ausrichtet, und
das Gleitzeigerelement (15N) ein Positionierungselement (152N) aufweist, das in Radialrichtung durch das Gleitzeigerelement (15N) geformt ist, um an die Außenfläche des Körpers (10N) anzustoßen.

2. Zahnmedizinisches Werkzeug nach Anspruch 1, wobei eine Zahlenmarkierung (123C) auf der Außenfläche des Körpers (10) an jeder Markierung (122C) des Messungsabschnitts (12C) geformt ist.

3. Zahnmedizinisches Werkzeug nach Anspruch 1, wobei jede Markierung (122, 122C) des Messungsabschnitts (12, 12C) eine Gitterkerbe oder eine offensichtliche Spurkerbe ist.

4. Zahnmedizinisches Werkzeug nach Anspruch 1, wobei jede Markierung (122, 122C) des Messungsabschnitts (12, 12C) eine deutliche Kerbe ist.

5. Zahnmedizinisches Werkzeug nach einem der Ansprüche 1 bis 4, wobei das Gleitzeigerelement (15A) eine Röhre ist, die um den Körper (10) angebracht ist.

6. Zahnmedizinisches Werkzeug nach einem der Ansprüche 1 bis 4, wobei
der Körper (10) zwei Stababschnitte (13) aufweist,
die zwei Stababschnitte (13) miteinander verbunden sind und unterschiedliche Außendurchmesser aufweisen und eine stufenförmige Fläche (14) an einer Verbindungsposition zwischen den zwei Stababschnitten (13) geformt ist und
der Messungsabschnitt (12) auf Außenflächen der zwei Stababschnitte (13) geformt ist.

7. Zahnmedizinisches Werkzeug nach einem der Ansprüche 1 bis 4, wobei
der Körper (10R) zwei Stababschnitte (13R) aufweist,
die zwei Stababschnitte (13R) miteinander verbunden sind und gleiche Außendurchmesser aufweisen, so dass der Körper (10R) einen einzigen Außendurchmesser aufweist.

8. Zahnmedizinisches Werkzeug nach einem der Ansprüche 1 bis 4, wobei das zahnmedizinische Werkzeug Folgendes aufweist:
zwei Verbindungsabschnitte (11), die jeweils an zwei Enden des Körpers (10K, 10L) geformt sind, und
zwei Arbeitselemente (20K, 20L), die jeweils mit den zwei Verbindungsabschnitten (11) verbunden sind.

## Revendications

1. Outil dentaire comprenant :
un corps (10, 10B, 10D, 10E, 10G, 10I, 10K, 10L, 10M, 10N, 10O, 10P, 10Q, 10R, 10S) comportant une section de connexion (11, 11D, 11F, 11H, 11Q, 11R, 11S) disposée sur une extrémité du corps (10, 10B, 10D, 10E, 10G, 10I, 10K, 10L, 10M, 10N, 10O, 10P, 10Q, 10R, 10S) ; et une section de mesure (12, 12C) formée sur une surface externe du corps (10, 10B, 10D, 10E, 10G, 10I, 10K, 10L, 10M, 10N, 10O, 10P, 10Q, 10R, 10S) opposée à la section de connexion (111, 11D, 11F, 11H, 11Q, 11R, 11S) et comportant
une échelle graduée (121) formée sur la surface externe du corps (10) tous les 1 millimètre ; et une marque (122, 122C) formée sur la surface externe du corps (10) tous les 5 millimètres ;
un élément de travail (20, 20D, 20E, 20F, 20G, 20G', 20H, 20H', 20H", 20I, 20J, 20K, 20L, 20Q, 20R, 20S) connecté au corps (10, 10B, 10D, 10E, 10G, 10I, 10K, 10L, 10M, 10N, 10O, 10P, 10Q, 10R, 10S) et comportant
une extrémité de connexion (21, 21D, 21E, 21F, 21G, 21G', 21H, 21I, 21Q, 21R, 21S) connectée à la section de connexion (11, 11D 11F, 11H, 11Q, 11R, 11S) du corps (10, 10B, 10D, 10E, 10G, 10I, 10K, 10L, 10M, 10N, 10O, 10P, 10Q, 10R, 10S) ; et
une extrémité de travail (22, 221 été, 22J, 22S) connectée à l'extrémité de connexion (21, 21D, 21E, 21F, 21G, 21G', 21H, 21I, 21Q, 21R, 21S) de l'élément de travail (20, 20D, 20E, 20F, 20G, 20G', 20H, 20H', 20H", 20I, 20J, 20K, 20L, 20Q, 20R, 20S) et se prolongeant hors de la section de connexion (11, 11D, 11F, 11H, 11Q, 11R, 11S) du corps (10, 10B, 10D, 10E, 10G, 10I, 10K, 10L, 10M, 10N, 10O, 10P, 10Q, 10R, 10S),
le corps (10N) comportant un élément curseur (15N) monté de manière mobile autour du corps (10N) et aligné avec l'une des échelles graduées (121) ou les marques (122) de la section de mesure (12) ; et
l'élément curseur (15N) comportant un élément de positionnement (152N) formé radialement à travers l'élément curseur (15N) pour venir buter contre la surface externe du corps (10N).

2. Outil dentaire selon la revendication 1, dans lequel une marque numérique (123C) est formée sur la surface externe du corps (10) au niveau de chaque marque (122C) de la section de mesure (12C).

3. Outil dentaire selon la revendication 1, dans lequel chaque marque (122, 122C) de la section de mesure (12, 12C) est une encoche de maille ou une encoche de trace évidente. Je

4. Outil dentaire selon la revendication 1, dans lequel chaque marque (122, 122C) de la section de mesure (12, 12C) est une encoche prononcée.

5. Outil dentaire selon l'une quelconque des revendications 1 à 4, dans lequel l'élément curseur (15A) est un tube monté autour du corps (10).

6. Outil dentaire selon l'une quelconque des revendications 1 à 4, dans lequel le corps (10) comporte deux sections de tige (13) ;
les deux sections de tige (13) sont reliées l'une à l'autre et présentent des diamètres extérieurs différents et une face étagée (14) est formée au niveau d'un emplacement de liaison entre les deux sections de tige (13) ; et
la section de mesure (12) est formée sur les surfaces extérieures des deux sections de tige (13).

7. Outil dentaire selon l'une quelconque des revendications 1 à 4, dans lequel le corps (10R) comporte deux sections de tige (13R) ; et
les deux sections de tige (13R) sont reliées l'une à l'autre et présentent des diamètres extérieurs égaux, de sorte que le corps (10R) présente un diamètre extérieur unique.

8. Outil dentaire selon l'une quelconque des revendications 1 à 4, dans lequel l'outil dentaire comporte deux dites sections de connexion (11) formées respectivement sur deux extrémités du corps (10K, 10L) ; et
deux desdits éléments de travail (20K, 20L) respectivement connectés aux deux dites sections de connexion (11).
